# EUROPÄISCHE PATENTSCHRIFT

(11) **EP 3 117 241 B1**
(45) Veröffentlichungstag und Bekanntmachung des Hinweises auf die Patenterteilung: **09.01.2019**
(21) Anmeldenummer: 15714427.0
(22) Anmeldetag: 09.03.2015
(51) Int. Cl.: G01T 1/167

(54) **VERFAHREN ZUM FREIMESSEN VON SCHÜTTGUT**
METHOD FOR MEASURING SAFE LEVELS OF BULK MATERIAL
PROCÉDÉ PERMETTANT DE MESURER UN PRODUIT EN VRAC

(30) Priorität: 10.03.2014 DE 102014103168
(43) Veröffentlichungstag der Anmeldung: 18.01.2017
(73) Patentinhaber: Nukem Technologies Engineering Services GmbH, 63755 Alzenau (DE); DMT GmbH & Co. KG, 45307 Essen (DE)
(72) Erfinder: LANGER, Felix, 01099 Dresden (DE); SCHULTHEIS, Roland, 61169 Friedberg (DE); SOKCIC-KOSTIC, Marina, 63452 Hanau (DE); HUCKE, Andreas, 45134 Essen (DE); FEINHALS, Jörg, 21635 Jork (DE); HOCHHEIMER, Ulrich, 45665 Recklinghausen (DE)
(74) Vertreter: Stoffregen, Hans-Herbert
(86) Internationale Anmeldenummer: PCT/EP2015/054864
(87) Internationale Veröffentlichungsnummer: WO 2015/135885

(56) Entgegenhaltungen:
- DE-B4- 19 824 039
- U.-K. Schkade: "Verfahren zur Schnellbestimmung der spezifischen Aktivität natürlicher Strahler in NORM-Stoffen", , 1. Februar 2008 (2008-02-01), Seiten 1-13, XP055196585, Gefunden im Internet: URL:http://www.bmub.bund.de/fileadmin/bmu- import/files/pdfs/allgemein/application/pd f/strlsch_messungen_k01.pdf [gefunden am 2015-06-17]
- Bertram-Berg, A: "Leitfaden für die praktische Umsetzung des § 29 StrlSchV (Freigabeleitfaden)", 8. Dezember 2005 (2005-12-08), Fachverband für Strahlenschutz e.V., XP002741067, Seiten 1-55, Seite 14 Seite 16

## Beschreibung

Die Erfindung bezieht sich auf ein Verfahren zum Freimessen von Radionuklide enthaltendem Schüttgut, das auf ein Förderband aufgegeben und mittels des Förderbandes einer Aufnahme zugeführt wird, wobei das Schüttgut während des Transports an ersten Detektoren vorbeigeführt wird, die über die Breite des Förderbandes Gammastrahlung spektrometrisch messen.

Ein entsprechendes Verfahren ist der DE 198 24 039 B4 zu entnehmen. Das Schüttgut wird hierzu chargenweise auf ein ScannerFörderband aufgebracht, dessen Auflagefläche auf die maximal vorgesehene Menge an Schüttgut ausgelegt sein muss.

Die DE 36 22 790 A1 bezieht sich auf ein Verfahren zur Zuordnung der Aktivität kontaminierter Bauteile und Materialien und eine Anordnung zur Durchführung des Verfahrens. Um auf einfache und flexible Weise eine Messung durchzuführen, wobei bei Freigabemessungen der Nachweis mit einer definierten Sicherheit erfolgen soll, ist vorgesehen, dass fehlerorientierte Schwellwerte berücksichtigt werden, wobei messgeräteabhängige Parameter wie Fenstergröße eines Detektors berücksichtigt werden. Ein Leitnuklid sowie Kalibrierfaktoren für die Untergrundstrahlung werden gleichfalls einbezogen.

Eine Transportanordnung zum Aussortieren radioaktiven Abfalls ist aus der US 4 679 738 A bekannt. Dabei sind Maßnahmen vorgesehen, um eine Vergleichmäßigung der Schichthöhe des unter Detektoren vorbeizuführenden Abfalls zu erreichen.

Nach der US 4 679 738 A werden radioaktive Materialien von nicht kontaminierten separiert. Hierzu wird Material entlang eines Förderbandes unter Sensoren hindurchgeführt.

Um Schüttgut freizumessen, ist es auch bekannt, von in Fässern oder Containern gelagerten Materialien die Gammastrahlung von messbaren Radionukliden zu messen. Hierbei ist u. a. der Nachteil gegeben, dass nur die Gesamtradioaktivität ermittelt werden kann, so dass gegebenenfalls vorhandene Bereiche von Materialien geringerer Aktivität, die vorgegebene Grenzwerte nicht überschreiten, als kontaminiertes Material entsorgt werden müssen. Problematisch ist auch, wenn von Materialien die Kontamination mittels Gamma-Spektrometrie nicht gemessen werden kann.

Es sind auch Verfahren bekannt, bei denen ein Freimessen von übergroßen Objekten durch Totalgammamessungen durchgeführt wird. Dabei können jedoch insbesondere Radionuklide, die niederenergetische Gammastrahlen emittieren, nicht sicher erfasst werden, so dass Probeentnahmen erforderlich sind.

Ein Nachteil der bekannten Verfahren zum Freimessen ist es, dass bei Schüttgut einzelne Chargen nacheinander gemessen werden müssen, also ein batchweises und kein kontinuierliches Messen erfolgt. Auch ist von Nachteil, dass bei bekannten Verfahren Probeentnahmen erforderlich sind, um Aussagen über die Radionukliden und damit die Radioaktivität treffen zu können.

Der vorliegenden Erfindung liegt die Aufgabe zugrunde, ein Verfahren zum Freimessen von Schüttgut der eingangs genannten Art so weiterzubilden, dass bei hohem Durchsatz eine genaue Bestimmung der Radioaktivität erfolgen kann.

Auch soll gegebenenfalls die Möglichkeit bestehen, Rückschlüsse auf den Ort der Radionuklide zu ziehen, von denen das das Schüttgut bildende Material stammt.

Nach einem weiteren Aspekt soll die Möglichkeit gegeben sein, problemlos die Radioaktivität von Schüttgut unterschiedlicher Voluminia zu ermitteln, um Behältnisse wie Fässer mit entsprechenden Volumina befüllen zu können.

Zur Lösung einer oder mehrerer zuvor genannten Aspekte sieht die Erfindung im Wesentlichen ein Verfahren zum Freimessen von Radionuklide enthaltendem Schüttgut vor, das auf ein Förderband aufgegeben und mittels des Förderbandes einer Aufnahme zugeführt wird, wobei das Schüttgut während des Transports an ersten Detektoren vorbeigeführt wird, die über die Breite des Förderbandes Gammastrahlung spektrometrisch messen, das gekennzeichnet ist durch die Verfahrensschritte
- Bestimmung des Verhältnisses der Radionuklide in dem Schüttgut vor Aufgabe auf das Förderband unter Berücksichtigung von zumindest einem Leitnuklid
- Berechnung der Aktivität zumindest einer Teilmenge des Schüttgutes auf der Basis der von den ersten Detektoren gemessenen Gammastrahlung und deren Intensität des zumindest einen Leitnuklids
- Überprüfen der zuvor bestimmten Radionuklidverhältnisse und/oder der berechneten Radioaktivität mittels α- und/oder β-Strahlung messender zweiter Detektoren, die oberhalb des Förderbandes angeordnet sind.

Es wird folglich die Leitnuklidmethode angewendet, um über einen Nuklidvektor aus gammaspektrometrisch gemessenen Radionukliden die Gesamtradioaktivität des gemessenen Materials zu bestimmen, also insbesondere einer in einer Messzeiteinheit gemessenen auch als Zelle zu bezeichnenden Teilmenge zu bestimmen. Dabei erfolgt auch eine Messung der α- und/oder β-Strahlung, wodurch nicht nur eine Verifizierung der vorausgesetzten Nuklidverhältnisse erfolgt, sondern auch Radionuklide erfassbar sind, die mittels Gammadetektoren nicht messbar sind, wie Pu-241 oder U-235. Insbesondere erfolgt durch die Messung der emittierten α- und β-Strahlung eine Kontrolle der aus der über die Gammaspektrometrie und Leitnuklidmethode berechneten Nuklidzusammensetzung.

Zu den die α- und β-Strahlung ermittelnden Detektoren ist somit ganz allgemein zu sagen, dass diese die Hauptaufgaben haben zu überprüfen, ob der zugrunde gelegte Nuklidvektor zutreffend ist. Mittels der α- und β-Strahlungsmessung können jedoch auch weitere Informationen generiert werden.

Liegen die Ergebnisse der α- und β-Strahlungsmessung außerhalb von dem durch den verwendeten Nuklidvektor vorgegebenen Wert unter Berücksichtigung einer Toleranz, so wird festgelegt, dass der verwendete Nuklidvektor nicht vollständig zutreffend ist. Liegt das Messergebnis über der Erwartung, wird das Material als radioaktiver Abfall deklariert. Ferner werden die direkten Messergebnisse gespeichert. Die berechneten Werte werden als nicht vertrauenswürdig eingestuft. Sind berechnete Werte nicht vertrauenswürdig, wird das entsprechende Material nicht freigegeben.

Die ersten Detektoren, also Gammadetektoren, sind vorzugsweise oberhalb des Förderbands angeordnet. "Oberhalb" schließt jedoch auch andere Anordnungen wie eine Anordnung unterhalb bzw. unter- und oberhalb oder seitlich bzw. ergänzend seitlich des Förderbandes ein.

Dabei ist in hervorzuhebender Weiterbildung vorgesehen, dass während des Transports die Höhe der zu messenden Materialmenge auf dem Förderband gemessen wird.

Die Höhenmessung dient dem Grunde nach zur Kontrolle, da das auf das Förderband aufgegebene Schüttgut vor dessen Vorbeiführen an den ersten Detektoren in seiner Höhe eingestellt wird. Hierzu wird das Schüttgut vorzugsweise unter einem oberhalb des Förderbandes angeordneten Abstreifer hindurchgeführt. Durch die Höhe des Schüttgutes und die Breite des Förderbandes ist somit das transportierte Volumen des Schüttgutes ermittelbar.

Um insbesondere niederenergetische Gammastrahlung, vorzugsweise im Bereich von 50 keV, im hinreichenden Umfang messen zu können, ist insbesondere vorgesehen, dass die ersten Detektoren in Reihen quer zur Förderrichtung des Förderbandes angeordnet werden, wobei pro Reihe zumindest ein erster Detektor, vorzugsweise zumindest zwei erste Detektoren vorgesehen ist bzw. sind. Dabei werden die ersten Detektoren derart angeordnet, dass sich die Messfelder überlappen. Insbesondere ist vorgesehen, dass ein Messfeld eine Größe von 60 cm x 60 cm bis 100 cm x 100 cm, insbesondere 80 cm x 80 cm aufweist.

Auch bezüglich der zweiten Detektoren, die die α- und/oder β-Strahlen, insbesondere α- und β-Strahlen messen, ist vorgesehen, dass diese in Reihen, vorzugsweise in zumindest zwei Reihen angeordnet werden, wobei die Detektoren einer Reihe versetzt zu denen der anderen Reihe angeordnet werden, so dass sichergestellt ist, dass über die gesamte Breite des Förderbandes ein lückenloses Messen durchgeführt werden kann.

Das gemessene Schüttgut wird bevorzugterweise an ein als Aufnahme dienendes zweites Förderband übergeben, das eine Wiegeeinrichtung aufweist. Somit können die gemessenen Zellen bzw. die zu Chargen zusammengefassten Zellen über die entsprechenden Mengenangaben zusätzlich charakterisiert werden, wodurch letztendlich ein aussagekräftiges Ergebnis über die Radioaktivität erzielbar ist.

Dabei ist insbesondere vorgesehen, dass auf das zweite Förderband Schüttgut mit einem Volumen aufgegeben wird, das dem eines Behältnisses wie Fasses entspricht, in das das Schüttgut von dem zweiten Förderband übergeben werden soll.

Die Volumenbestimmung erfolgt dadurch, dass das auf dem Förderband an den ersten und zweiten Detektoren vorbeigeförderte Schüttgut in virtuelle Zellen unterteilt wird, wobei die Messergebnisse der ersten und zweiten Detektoren den Zellen in Abhängigkeit von der Position des Förderbandes zugeordnet werden. Die Länge einer virtuellen Zelle in Förderbandförderrichtung sollte dabei vorzugsweise der Länge des Messfeldes eines ersten Detektors in Förderbandförderrichtung entsprechen.

Da die Breite des Förderbandes und die Höhe des Schüttgutes auf dem Förderband bekannt sind, können somit entsprechend des Volumens eines zu befüllenden Behältnisses wie Fasses, eine entsprechende Anzahl von Zellen bzw. ein Teil dieser auf das zweite Förderband aufgebracht werden, um sodann unter Berücksichtigung des Gewichtes des auf dem zweiten Förderband vorhandenen Schüttgutes die Gesamtradioaktivität berechnen zu können. Hierzu wird die Radioaktivität der einzelnen Zellen, die nach der Leitnuklid-Methode ermittelt worden ist, berechnet. Bezüglich des ggfs. auf das zweite Förderband aufgegebenen Teilvolumens einer Zelle wird entsprechend des Volumenanteils der Zelle der Anteil der für die Zelle gemessenen Radioaktivität zu Grunde gelegt, da davon ausgegangen wird, dass die Radioaktivität homogen verteilt in dem Schüttgut vorliegt.

Mit anderen Worten stellen die Zellen im eigentlichen Sinne eine virtuelle Trennung des geförderten Schüttgutes dar. Dabei werden die Grenzen der Zellen vorzugsweise durch folgende Aspekte festgelegt. Das Befüllvolumen auf dem Dosierband soll über eine natürliche Zahl von Zellen erreicht werden. Eine Zelle sollte mindestens die Größe des Sichtbereichs eines Gammaspektrometers, also eines ersten Detektors aufweisen. Ferner sollte die Messdauer einer Zelle mindestens 10 sec lang sein. Ungeachtet dessen sollten die Zellen möglichst groß sein, um den Berechnungsaufwand zu reduzieren und die Aussagekraft einzelner Messungen von Zellen zu erhöhen.

Durch die zweiten Detektoren ist insbesondere der Vorteil gegeben, dass die Ergebnisse der Berechnungen über die Leitnuklidmethode für α- und β-Strahlung direkt auf Plausibilität geprüft werden können.

Treten nach dem Stand der Technik Messverfälschungen z. B. durch Selbstabsorption oder aufgrund zu geringer Höhe des zu messenden Materials auf, so können diese Nachteile aufgrund des zumindest einen dritten Detektors eliminiert werden, mittels dessen die Höhe des auf dem Förderband geförderten Materials bestimmt wird. Es erfolgt eine Korrektur der ermittelten Radioaktivität des Schüttgutes unter Berücksichtigung der über den zumindest einen dritten Detektor ermittelte Schichthöhe. Durch die Höhenmessung erfolgt des Weiteren eine Aussage, ob das gemessene Material ausreichend nah an den zweiten Detektoren für eine belastbare Messung vorbeigeführt worden ist. Auch ergeben sich Aussagen über das Volumen in einer Zelle.

Die flächige Erstreckung einer Zelle ist dabei mindestens so groß, dass der Sichtbereich eines Gammaspektrometers, also eines ersten Detektors, komplett abgedeckt wird. Eine Zelle ist maximal so groß wie eine Charge.

Ferner sollte das Schüttgut Körner aufweisen, deren maximale Größe vorzugsweise 50 mm beträgt. Dabei darf allerdings die Korngröße der Partikel nicht größer sein als "Reichweite erwarteter α-Strahler in Luft" minus Abstand des zweiten Detektors zur idealen Material Oberfläche. Weist also z. B. das α-Teilchen in Luft eine Reichweite von 4,5 cm auf und beträgt der Abstand vom zweiten Detektor zur idealen Materialoberfläche 1,5 cm, so ergibt sich eine maximale Korngröße von 3 cm.

Unabhängig hiervon wird grundsätzlich davon ausgegangen, dass eine gleichbleibende Korngrößenverteilung für die gesamte gemessene Materialmasse vorliegt. Diese gleichbleibende Korngrößenverteilung sollte durch den dem Förderband vorgeordneten mechanischen Zerkleinerer wie Brecher sichergestellt sein.

Insbesondere wird mit den ersten und zweiten Detektoren über eine Zeit t mit insbesondere 0 min. < t ≤ 6 min., vorzugsweise 20 sec. ≤ t ≤ 4 min. zur Bestimmung der Radioaktivität der während der Zeit t durch die Messfelder der ersten und zweiten Detektoren geführten eine Zelle bildenden Materialen gemessen.

Um Messverfälschungen aufgrund von Ablagerungen an den Eintrittsfenstern der α- und/oder β-Detektoren zu vermeiden, sieht eine Weiterbildung der Erfindung vor, dass entlang des Förderbandes ein Gas, insbesondere Druckluft, derart geführt wird, dass dieses im Aufgabebereich des Förderbandes entgegen der Transportrichtung und im Abwurfbereich des Förderbandes in Transportrichtung strömt.

Es sollte im Bereich der Aufgabe bzw. des Abwurfs eine Gasströmung wie Druckluftströmung, erzeugt werden, die derart gerichtet ist, dass im Aufgabebereich das Gas entgegen der Transportrichtung und im Abwurfbereich in Transportrichtung strömt. Hierdurch werden Partikel von den Eintrittsfenstern der Detektoren, insbesondere der der α-/β-Detektoren, fern gehalten, so dass Ablagerungen vermieden werden.

Die Geschwindigkeit des strömenden Gases, wie Druckluft, sollte dabei in dem Wertebereich liegen, mit der das Förderband das Material fördert, insbesondere im Bereich zwischen 1 cm/s und 3 cm/s, vorzugsweise in etwa 2 cm/s.

Durch die entsprechenden Geschwindigkeitswerte werden Verwirbelungen vermieden. Gleichzeit wird jedoch im Aufgabe- bzw. im Abwurfbereich auftretender Staub sicher entfernt.

Die erfindungsgemäße Vorrichtung kann in einen inneren oder ausführenden und einen äußeren oder steuernden Arbeitsbereich unterteilt werden. Der innere oder ausführende Arbeitsbereich ist derjenige, in dem die Messung durchgeführt wird. Dabei kann der innere Arbeitsbereich vollständig fernbedient werden, so dass sich der Vorteil ergibt, dass in einem potentiell kontaminierten Arbeitsbereich gemessen werden kann. Steuerung und Auswertung erfolgen im äußeren oder steuernden Arbeitsbereich. Der äußere Arbeitsbereich befindet sich selbstverständlich in einem nichtkontaminierten Bereich.

Durch die diesbezügliche Aufteilung besteht auch die Möglichkeit, eine transportable Messanordnung zur Verfügung zu stellen, die z. B. in einem Container angeordnet werden kann. In diesem bedarf es nur der Anordnung des Messbandes sowie der Detektoren und gegebenenfalls der die Luftströmung im Aufgabe- und Abwurfbereich des Messbandes erzeugenden Drucklufteinrichtung, sofern eine solche gewünscht wird.

Die erfindungsgemäße Lehre ermöglicht des Weiteren, Hot Spots zu identifizieren. So können bei Erfassung von von der zuvor ermittelten Radionuklidverteilung abweichenden Spektralmesswerten Ort der den abweichenden Spektralmesswerten zuzuordnenden Radionukliden ermittelt werden, also Hot Spots.

Erfindungsgemäß kann kontinuierlich Schüttgut frei gemessen werden, wobei eine Überprüfung durch die α- und/oder β-Detektoren erfolgt, ob das der angewendeten Leitnuklidmethode zugrunde gelegte Verhältnis der Radionuklide zutreffend ist.

Das System erlaubt es, die Leitnuklidmethode nachträglich mit anderen Nuklidvektoren anzuwenden und so die Qualität der Messungen zu kontrollieren und sicherzustellen.

Es kann in staubiger Umgebung gearbeitet werden, da durch eine geführte Gas- bzw. Luftströmung sichergestellt ist, dass Ablagerungen an den Eintrittsfenstern der Detektoren, insbesondere der α- und/oder β-Detektoren, unterbleiben.

Neben dem Einsatz unter rauen Bedingungen wird ein robustes Verfahren zur Verfügung gestellt, bei dem zusätzliche Prozessmedien nicht erforderlich sind. Wartung und Instandsetzung werden vereinfacht.

Ungeachtet einer kontinuierlichen Messung und damit fortwährender Materialaufgabe auf das Förderband ist sichergestellt, dass Messverfälschungen durch eine unzulässige Befüllung des Förderbandes unterbleiben oder bei zu geringer Befüllung des Förderbandes Messungen unberücksichtigt bleiben, indem die Höhe des auf dem Förderband geförderten Materials bestimmt wird. Es können Radionuklide erfasst werden, die reine β-Strahler sind. Nicht erwartete Radionuklide werden erfasst, wobei die Möglichkeit besteht, Rückschlüsse auf den Ort zu erzielen, von dem diese stammen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

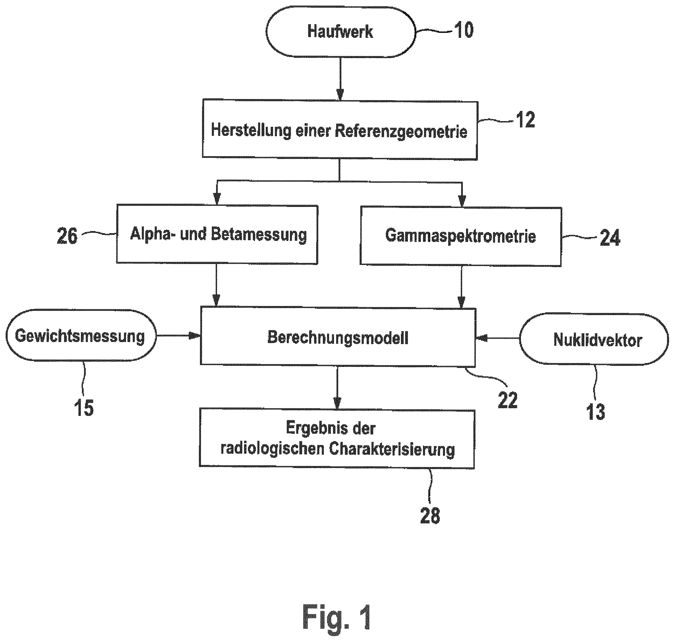

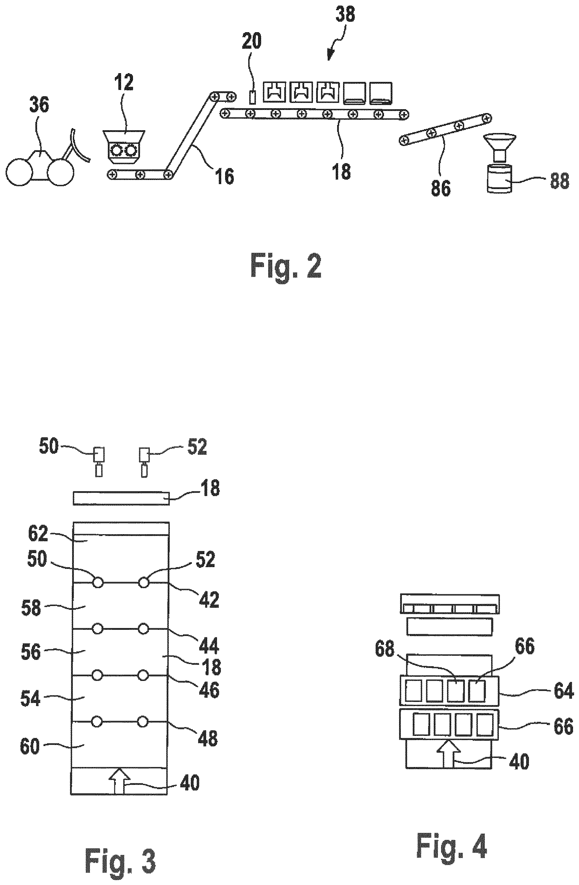

Es zeigen:
- Fig. 1: ein Flussdiagramm des erfindungsgemäßen Verfahrens,
- Fig. 2: eine Prinzipdarstellung einer Vorrichtung zum Freimessen von schüttfähigem Material,
- Fig. 3: eine Prinzipdarstellung einer Anordnung von Gammaspektrometern,
- Fig. 4: eine Prinzipdarstellung einer Anordnung von α-/β-Detektoren,
- Fig. 5a) bis c): Prinzipdarstellungen eines Mess- und Dosiervorganges und
- Fig. 6: eine Prinzipdarstellung einer gerichteter Luftströmung.
Anhand der Fig. wird ein erfindungsgemäßes Verfahren zum Freimessen von schuttfähigen Materialen erläutert, wobei die Darstellungen rein prinzipiell zu verstehen sind.
Das Verfahren selbst wird anhand der Fig. 1 noch einmal verdeutlicht. Ein Haufwerk 10 wird z.B. mittels eines Brechers 12 zerkleinert. Insbesondere werden Partikel einer Größe im Bereich bis zu 5 cm hergestellt. Das entsprechende Schüttgut wird im Ausführungsbeispiel der Fig. 2 über einen Z-Förderer 16 auf ein als Messband 18 bezeichnetes Förderband oder andere geeignete Fördereinrichtung übergeben. Um eine gewünschte Höhe sicherzustellen, befindet sich am Anfang des Messbands 18 ein Abstreifer 20. Durch das Zerkleinern, das Verteilen des zerkleinerten Haufwerks, also des Schüttguts über die gesamte Breite des Messbandes 18 und die durch den Abstreifer 20 vorgegebene Höhe des Schüttgutes auf dem Messband 18 wird eine Referenzgeometrie 12 hergestellt.
Vor Aufgabe des Schüttgutes auf das Messband 18, insbesondere vor Zerkleinern des Haufwerkes 10 werden ein oder mehrere Leitnuklide des Haufwerks ermittelt, um sodann über einen Nuklidvektor aus gammaspektrometrisch gemessenen Radionukliden die Gesamtradioaktivität des Schüttgutes zu ermitteln.

Mittels Gammaspektrometrie 24 werden die messbaren Radionuklide ermittelt. Mittels α- und β-Strahlenmessung 26 erfolgt eine Überprüfung, also eine Verifizierung, ob die angenommene Radionuklidverteilung für die Anwendung des Leitnuklidverfahrens oder eines entsprechenden Verfahrens richtig angesetzt worden ist. Auch lassen sich mittels der α- und β-Strahlenmessung 26 Radionuklide messen, die mittels der Gammaspektrometrie nicht erfasst werden, wie z. B. Pu-241.

Unter Berücksichtigung der gemessenen Gammaspektren und des Nuklidvektors 13 sowie unter Einbeziehung des Gewichts des Schüttgutes (Gewichtsmessung 15) wird sodann die Gesamtradioaktivität berechnet (Berechnungsmodell 22), um sodann eine radiologische Charakterisierung 28 vornehmen zu können. Die radiologische Charakterisierung 28 dient dazu, das Schüttgut entweder freizugeben oder z. B. als radioaktiven Abfall zu deklarieren oder z. B. unter Tage zu verwerten.

Das Verfahren wird technisch prinzipiell mit denen der Fig. 2 zu entnehmenden Komponenten umgesetzt. So wird das Haufwerk 10 mittels eines Ladegeräts wie Schaufellader 36 dem Brecher 12 oder einer gleichwirkenden Vorrichtung zugeführt, um sodann das Schüttgut definierter Geometrie über den Z-Förderer 16 dem Messband 18 zuzuführen. Im Ausführungsbeispiel sind oberhalb des Messbandes Messmodule 38 angeordnet, und zwar in quer zur Förderrichtung 40 des Messbandes 18 verlaufenden in Reihen 42, 44, 46, 48 angeordneten Gammaspektrometer, von denen beispielhaft zwei mit den Bezugszeichen 50, 52 gekennzeichnet sind. Die Messfelder der Gammaspektrometer 50, 52 überlappen sich sowohl quer zur Förderrichtung 40 als auch entlang dieser.

Eine andere Anordnung der Messmodule, also der Gammaspektrometer 50, 52, z. B. um das Messband 18 herum, ist gleichfalls möglich.

Die Messfelder 54, 56, 58 werden von jeweils vier Gammadetektoren abgedeckt. Die Gammadetektoren 50, 52 in Fig. 3 decken die Messfelder 58, 62 ab. Aus der Fig. 3 wird ersichtlich, dass der Abdeckungsbereich verschiedener Gammaspektrometer überlappend angeordnet wird.

Bei den Gammadetektoren 50, 52 kann es sich z. B. um HPGe Spektrometer, 30 % Nachweiseffizienz handeln.

In Förderrichtung sind nach den Gammadetektoren 50, 52 gleichfalls in quer zur Förderrichtung 40 verlaufenden Reihen 64, 66 α- und β-Detektoren angeordnet, von denen einige mit den Bezugszeichen 66, 68 gekennzeichnet sind. Die Detektoren sind in den Reihen 64 und 66 versetzt zueinander angeordnet, so dass sichergestellt ist, dass das auf dem Förderband bzw. Messband 18 vorhandene und zu messende Schüttgut über die ganze Breite des Messbands 18 gemessen werden kann.

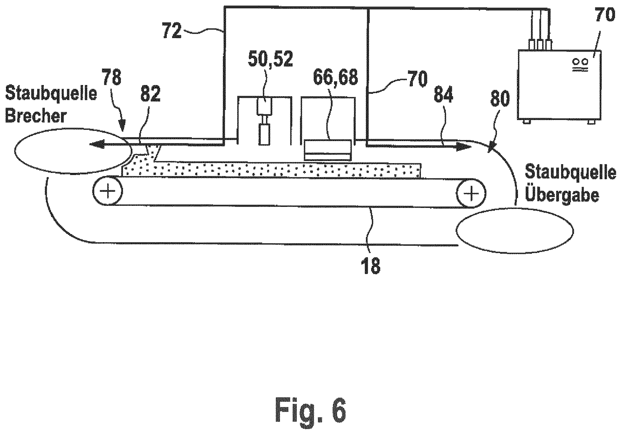

Die α- und β-Detektoren 66, 68 sind zum Messband 18 hin nicht eingehaust, da anderenfalls eine Absorption erfolgen würde, die eine Erfassung der α-Strahlen nicht möglich macht. Um ungeachtet dessen sicherzustellen, dass das Eintrittsfenster der Detektoren 66, 68 nicht verschmutzt, wird entsprechend der Fig. 6 gezielt eine Strömung im Bereich sämtlicher Detektoren erzeugt. So wird von einer Druckluftquelle 70 über Leitungen 71, 72 Druckluft im Aufgabebereich 78 des Messbandes und im Bereich dessen Übergabe- oder Austragsbereichs 80 eine Strömungsrichtung derart erzeugt, dass im Aufgabebereich 78 entsprechend dem Pfeil 82 Druckluft entgegen der Förderrichtung und am Austragsende 80 entsprechend dem Pfeil 84 in Förderrichtung erzeugt wird. Somit wird der bei der Übergabe des Schüttguts bzw. beim Abwerfen dieses möglicherweise auftretender Staub weggeführt, so dass eine Verschmutzung insbesondere der α- und β-Detektoren 66, 68 unterbleibt. Die weggeführten Stäube können gesammelt und im Aufgabebereich 78 des Messbandes 18 dem Schüttgut beigegeben werden.

Dem Messband 18 ist ein als Aufnahme zu bezeichnendes Dosierband 86 nachgeordnet, das gleichzeitig als Wiegeeinrichtung ausgebildet ist, um das Gewicht des gemessenen Schüttguts zu erfassen.

Von dem Dosierband 86 gelangt das Schüttgut sodann über eine Befülleinrichtung in Behälter wie Fässer 88, um entsprechend der durchgeführten Klassifizierung das Schüttgut einer weiteren Verwertung zuzuführen. Dabei wird auf das Dosierband 86 ein Volumen an Schüttgut aufgegeben, das dem des Behälters 88 entspricht, in dem das Schüttgut eingefüllt werden soll.
Um die Gesamtradioaktivität des auf dem Dosierband 86 vorhandenen und in ein Fass 88 einzufüllenden Schüttguts zu bestimmen, wird das sich auf dem Dosierband 86 befindliche Schüttgut in eine Anzahl von Zellen unterteilt. Die Zellen stellen dabei eine virtuelle Unterteilung des auf das Messband 18 aufgebrachten Schüttgutes dar, wobei die Messwerte einer jeden Zelle in Abhängigkeit von der Position des Messbandes 18 ermittelt werden. Dabei wird über eine vorgegebene Zeit gemessen, um sodann eine Zuordnung der Messergebnisse der ersten bzw. zweiten Detektoren zu der jeweiligen Zelle vorzunehmen. Das Volumen einer jeden Zelle wird dadurch berechnet, dass die Länge der Zelle in Messbandförderrichtung festgelegt wird, so dass aufgrund der Höhe des Schüttgutes auf dem Messband 18 und dessen Breite das Volumen einer Zelle festgelegt ist. Entsprechend des Volumens das Fasses 88 werden eine entsprechende Anzahl von Zellen zuzüglich ggfs. ein Teil einer Zelle auf das Dosierband 86 übergeben, um sodann das Gewicht zu messen, um unter Berücksichtigung der Messergebnisse zumindest der ersten Detektoren 50, 52 und des Nuklidverfahrens die Gesamtradioaktivität des sich auf dem Dosierband 86 befindlichen Schüttgutes zu berechnen. Das auf dem Dosierband 86 befindliche Schüttgut ist als Charge zu bezeichnen.
Das Messband 18 kann z. B. eine Länge zwischen 5 m und 8 m und/oder das Dosierband 86 zwischen 2 m und 4 m aufweisen.

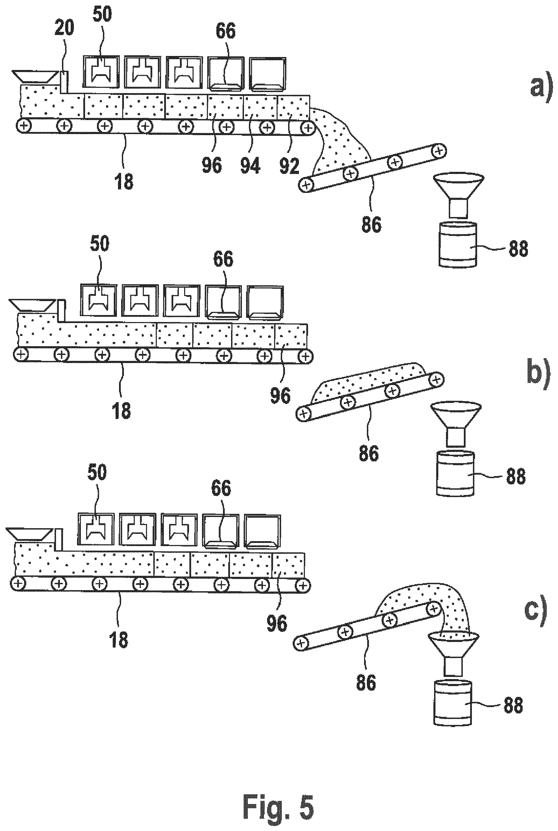

Durch die in Reihen angeordnete γ-Detektoren 50, 52 können auch bei geringer Aktivität insbesondere niederenergetische Gammastrahlen z. B. im Bereich von 50 keV erfasst werden. Die an den Gammadetektoren 50, 52 vorbeigeförderten Materialien werden messtechnisch in sogenannte Zellen 92, 94, 96 untergliedert, wie sich prinzipiell aus der Fig. 5 ergibt. Die entsprechenden Zellen 92, 94, 96 werden gemessen, wobei die Messzeiten pro Gammadetektor 50, 52 zwischen 20 Sekunden und 4 Minuten liegen kann, um nur beispielhaft Zeiten zu nennen. Dabei werden die einzelnen Zellen 92, 94, 96 von den in den Reihen 42, 44, 46, 48 angeordneten Detektoren 50, 52 gemessen und sodann die Messergebnisse ggfs. gewichtet addiert, um eine hinreichende und damit auswertbare Messrate zu erzielen. Von den einzelnen Zellen 92, 94, 96 werden auch die gesamten α- und β-Strahlen gemessen, um sodann zum einen auf die Gesamtmenge der Radioaktivität schließen bzw. diese berechnen zu können und zum anderen zu überprüfen, ob die vor Aufgabe des Schüttgutes ermittelte Radionuklidverteilung, also das Verhältnis der Radionuklide untereinander, zur Anwendung der Leit- bzw. Schlüsselnuklidmethode zutreffend ist.

Mit anderen Worten wird das auf das Messband 18 aufgegebene Schüttgut in virtuelle Zellen 92, 94, 96 untergliedert, wobei deren Position sich in Abhängigkeit von der Bewegung des Messbandes 18 verändert. Die Position des Messbandes 18 wird somit zur Festlegung der Position der jeweiligen virtuellen Zellen 92, 94, 96 benutzt.

Wie sich aus den Fig. 5a bis 5c ergibt, werden die zu Chargen zusammengefassten Zellen 92, 94 auf das Dosierband 86 übergeben, um sodann nach Erreichen eines vorgegebenen Volumens das gepufferten Schüttguts und Wiegen dieses dem Behälter 88 zuführen zu können. Während dieses Prozesses steht grundsätzlich das Messband 18 still.

Um Messverfälschungen bzw. nicht verwertbare Messungen auszuschließen, ist erfindungsgemäß des Weiteren vorgesehen, dass die Höhe des auf dem Messband 18 angeordneten Schüttguts gemessen werden kann. Dies kann z. B. mittels Ultraschall erfolgen. Höhenabweichungen werden bei Berechnung der Radioaktivität berücksichtigt, da die Abhängigkeit von der Höhe Einfluss auf die Menge an Strahlung des emittierenden Materials hat. Auch erfordert die Messung von α-Strahlung einen Maximalabstand zwischen dem Detektor 66, 68 zur Materialoberfläche von wenigen Zentimetern. Sollte die Schichthöhe des Schüttgutes auf dem Messband 18 zu gering sein, so werden die für diese Bereiche ermittelten Werte als nicht aussagefähig angesehen.

Die Höhenmessung dient auch dazu, um zu überprüfen, ob die Zellen das berechnete Volumen aufweisen.

Erfindungsgemäß wird grundsätzlich kontinuierlich gefördertes Schüttgut gemessen, wobei gegebenenfalls eine Unterbrechung dann erfolgt, wenn von dem Dosierband 86 aufgenommenes gemessenes Schüttgut an die Aufnahme 88 übergeben werden soll. Diese Unterbrechung ist jedoch dann nicht notwendig, wenn zum einen das Dosierband im Vergleich zum Messband 18 eine hinreichende Länge aufweist und zum anderen mit unterschiedlichen Geschwindigkeiten gefördert wird, so dass sich auf dem Dosierband 86 eine Lücke zwischen aufzugebendem Schüttgut ergibt, die genutzt werden kann, um nacheinander Behälter 88 zu befüllen.

## Patentansprüche

1. Verfahren zum Freimessen von Radionukliden enthaltendem Schüttgut, das auf ein Förderband (18) aufgegeben und mittels des Förderbandes einer Aufnahme zugeführt wird, wobei das Schüttgut während des Transportes an ersten Detektoren (50, 52) vorbeigeführt wird, die über die Breite des Förderbandes Gammastrahlung spektrometrisch messen,
**gekennzeichnet durch** die Verfahrensschritte
- Bestimmung des Verhältnisses der Radionuklide in dem Schüttgut vor Aufgabe auf das Förderband unter Berücksichtigung von zumindest einem Leitnuklid
- Berechnung der Radioaktivität des Schüttgutes auf der Basis der mittels der ersten Detektoren gemessenen Gammastrahlen und deren Intensitäten unter Berücksichtigung einer oder mehrerer von in den Radionukliden vorhandenen Leitnukliden
- Überprüfen des zuvor bestimmten Radionuklidverhältnisses und/oder der gemessenen Radioaktivität mittels α- und/oder β-Strahlung messender zweiter Detektoren (66, 68), die oberhalb des Förderbandes angeordnet sind.

2. Verfahren nach Anspruch 1,
**dadurch gekennzeichnet,**
**dass** die ersten Detektoren oberhalb des Förderbandes angeordnet werden, wobei vorzugsweise die ersten Detektoren in mehreren Reihen quer zur Förderrichtung des Förderbandes angeordnet werden, wobei pro Reihe zumindest ein erster Detektor, vorzugsweise zwei erste Detektoren angeordnet wird bzw. werden.

3. Verfahren nach Anspruch 1,
02. März 2017 - 56343 geänderte Ansprüche 1 bis 15
**dadurch gekennzeichnet,**
**dass** mittels der zweiten Detektoren die α- und β-Strahlung lückenlos über die gesamte Breite des Förderbandes gemessen wird, wobei vorzugsweise die zweiten Detektoren in zumindest zwei Reihen derart angeordnet werden, dass sich die zweiten Detektoren in Transportrichtung betrachtet überlappen.

4. Verfahren nach zumindest einem der vorhergehenden Ansprüche,
**dadurch gekennzeichnet,**
**dass** während des Transports des Schüttgutes dessen Höhe auf dem Förderband gemessen wird.

5. Verfahren nach zumindest einem der vorhergehenden Ansprüche,
**dadurch gekennzeichnet,**
**dass** das Schüttgut von dem Förderband auf eine Aufnahme wie auf ein Förderband übergeben wird, die bzw. das eine Wiegeeinrichtung aufweist.

6. Verfahren nach zumindest einem der vorhergehenden Ansprüche,
**dadurch gekennzeichnet,**
**dass** als Schüttgut solches verwendet wird, bei dem die Radionuklide gleichmäßig verteilt vorliegen.

7. Verfahren nach zumindest einem der vorhergehenden Ansprüche,
**dadurch gekennzeichnet,**
**dass** das kontinuierlich geförderte Schüttgut messtechnisch in Zellen unterteilt wird.

8. Verfahren nach zumindest einem der vorhergehenden Ansprüche,
**dadurch gekennzeichnet,**
**dass** in Abhängigkeit von der Förderbandposition die von einem oder mehreren ersten Detektoren gemessene Radioaktivität einer Zelle zugeordnet wird.

9. Verfahren nach zumindest einem der vorhergehenden Ansprüche,
**dadurch gekennzeichnet,**
**dass** eine Zelle in Förderbandförderrichtung eine Länge aufweist, die dem Messbereich eines ersten Detektors in Förderbandförderrichtung entspricht.

10. Verfahren nach zumindest einem der vorhergehenden Ansprüche,
**dadurch gekennzeichnet,**
**dass** Zellen und/oder ggfs. zumindest ein Teil einer Zelle mit ggfs. voneinander abweichender Radioaktivität zu einer Charge zusammengefasst werden, wobei die ermittelte bzw. berechnete Radioaktivität der Zellen und/oder des ggfs. zumindest einen Teils einer Zelle zu einer Gesamtradioaktivität zusammengefasst werden, um in Abhängigkeit von dieser die Charge zu verwerten.

11. Verfahren nach zumindest einem der vorhergehenden Ansprüche,
**dadurch gekennzeichnet,**
**dass** als Schüttgut ein solches mit einer Korngröße bis zu 50 mm verwendet wird.

12. Verfahren nach zumindest einem der vorhergehenden Ansprüche,
**dadurch gekennzeichnet,**
**dass** die Strahlung über eine Zeit (t) mit insbesondere 0 min. < t ≤ 6 min., vorzugsweise 20 sec. ≤ t ≤ 4 min. zur Ermittlung der Radioaktivität der in der Zeit t an dem ersten und zweiten Detektor vorbeigeführten eine Zelle bildenden Menge an Schüttgut gemessen wird.

13. Verfahren nach zumindest einem der vorhergehenden Ansprüche,
**dadurch gekennzeichnet,**
**dass** durch die Höhe des Schüttguts bedingte Selbstabsorption von Strahlung durch die mittels des einen dritten Detektors ermittelte Höhe korrigiert wird.

14. Verfahren nach zumindest einem der vorhergehenden Ansprüche,
**dadurch gekennzeichnet,**
**dass** entlang des Förderbandes ein Gas, insbesondere Druckluft, derart geführt wird, dass dieses im Aufgabebereich des Förderbandes entgegen der Transportrichtung und im Abwurfbereich des Förderbandes in Transportrichtung strömt.

15. Verfahren nach zumindest einem der vorhergehenden Ansprüche,
**dadurch gekennzeichnet,**
**dass** in Abhängigkeit vom Volumen eines Behältnisses, wie Fass, in das Schüttgut einzufüllen ist, eine volumenmäßig bestimmte Anzahl von Zellen ggfs. zuzüglich einer oder mehrerer Teilzellen auf das zweite Förderband aufgebracht wird und deren Gewicht ermittelt und sodann in das Behältnis eingefüllt wird.

## Claims

1. Method for measuring safe levels of bulk material containing radionuclides which is deposited onto a conveyor belt (18) and is supplied by means of the conveyor belt to a receptacle, where during transport the bulk material is routed past first detectors (50, 52) which spectrometrically measure gamma radiation over the width of the conveyor,
**characterized by** the method steps:
- determining the ratio of radionuclides in the bulk material prior to deposition onto the conveyor belt, taking into account at least one reference nuclide
- calculating the radioactivity of the bulk material on the basis of the gamma rays measured by means of the first detectors, and their intensities, taking into account one or more reference nuclides present in the radionuclides
- checking the previously determined radionuclide ratio and/or the measured radioactivity by means of second detectors (66, 68) measuring α and/or β radiation and arranged above the conveyor belt.

2. Method according to claim 1,
**wherein**
the first detectors are arranged above the conveyor belt, with preferably the first detectors being arranged in several rows transversely to the conveying direction of the conveyor belt, with at least one first detector, preferably two first detectors, being arranged per row.

3. Method according to claim 1,
**wherein**
the α and β radiation is measured without gaps over the entire width of the conveyor belt by means of the second detectors, said second detectors preferably being arranged in at least two rows such that said second detectors overlap when viewed in the transport direction.

4. Method according to at least one of the preceding claims,
**wherein**
during transport of the bulk material its height on the conveyor belt is measured.

5. Method according to at least one of the preceding claims,
**wherein**
the bulk material is transferred from the conveyor belt onto a receptacle such as onto a conveyor belt which has a weighing device.

6. Method according to at least one of the preceding claims,
**wherein**
the bulk material used is one in which the radionuclides present are evenly distributed.

7. Method according to at least one of the preceding claims,
**wherein**
the continuously conveyed bulk material is subdivided into cells for measurement.

8. Method according to at least one of the preceding claims,
**wherein**
the radioactivity measured by one or more first detectors is associated with a cell depending on the conveyor belt position.

9. Method according to at least one of the preceding claims,
**wherein**
a cell has in the conveyor belt conveying direction a length corresponding to the measurement range of a first detector in the conveyor belt conveying direction.

10. Method according to at least one of the preceding claims,
**wherein**
cells and/or possibly at least a part of a cell with possibly diverging radioactivity are combined into a batch, with the determined or calculated radioactivities of the cells and/or of the possibly at least one part of a cell being combined into a total radioactivity in order to evaluate the batch depending on that.

11. Method according to at least one of the preceding claims,
**wherein**
the bulk material used is one with a grain size of up to 50 mm.

12. Method according to at least one of the preceding claims,
**wherein**
the radiation is measured over a time (t) where in particular 0 min. < t ≤ 6 min., preferably 20 sec. ≤ t ≤ 4 min., for determining the radioactivity of the bulk material quantity forming a cell and passing the first and second detectors in the time t.

13. Method according to at least one of the preceding claims,
**wherein**
the self-absorption of radiation contingent on the height of the bulk material is corrected by the height determined by means of the one third detector.

14. Method according to at least one of the preceding claims,
**wherein**
a gas, in particular compressed air, is passed along the conveyor belt such that it flows against the transport direction in the deposition area of the conveyor belt and in the transport direction in the ejection area of the conveyor belt.

15. Method according to at least one of the preceding claims,
**wherein**
depending on the volume of a container, such as a barrel, into which bulk material is to be filled, a number of cells determined by volume, and possibly one or more part-cells in addition, are deposited onto the second conveyor belt, their weight is determined, and the container is then filled.

## Revendications

1. Procédé permettant de mesurer un produit en vrac contenant des radionucléides, qui est déposé sur une bande transporteuse (18) et distribué à une réception au moyen de la bande transporteuse, sachant que le produit en vrac passe devant des premiers détecteurs (50, 52) pendant le transport, lesquels mesurent de manière spectrométrique le rayonnement gamma sur la largeur de la bande transporteuse, **caractérisé par** les étapes de procédé suivantes :
- détermination du rapport de radionucléides dans le produit en vrac avant sa dépose sur la bande transporteuse en considérant au moins un nucléide traceur ;
- calcul de la radioactivité du produit en vrac sur la base des rayonnements gamma mesurés au moyen des premiers détecteurs et de leurs intensités en considérant un ou plusieurs nucléides traceurs présents dans les radionucléides ;
- contrôle du rapport de radionucléides déterminé auparavant et/ou de la radioactivité mesurée au moyen de deuxièmes détecteurs (66, 68) mesurant le rayonnement α et/ou β qui sont disposés au-dessus de la bande transporteuse.

2. Procédé selon la revendication 1,
**caractérisé en ce**
**que** les premiers détecteurs sont disposés au-dessus de la bande transporteuse, sachant que de préférence les premiers détecteurs sont disposés en plusieurs rangées transversalement au sens de transport de la bande transporteuse, sachant qu'au moins un premier détecteur, de préférence deux premiers détecteurs sont disposés sur chaque rangée.

3. Procédé selon la revendication 1,
**caractérisé en ce**
**qu'**au moyen desdits deuxièmes détecteurs, le rayonnement α et β est mesuré en continu sur toute la largeur de la bande transporteuse, sachant que de préférence les deuxièmes détecteurs sont disposés en au moins deux rangées de telle sorte que les deuxièmes détecteurs se superposent si on les observe dans le sens de transport.

4. Procédé selon au moins une des revendications précédentes,
**caractérisé en ce**
**que** la hauteur du produit en vrac sur la bande transporteuse est mesurée pendant son transport.

5. Procédé selon au moins une des revendications précédentes,
**caractérisé en ce**
**que** le produit en vrac est transféré de la bande transporteuse à une réception telle qu'une bande transporteuse qui présente un dispositif de pesée.

6. Procédé selon au moins une des revendications précédentes,
**caractérisé en ce**
**qu'**est utilisé comme produit en vrac un produit dans lequel les radionucléides sont répartis de manière homogène.

7. Procédé selon au moins une des revendications précédentes,
**caractérisé en ce**
**que** le produit en vrac transporté de manière continue est divisé en cellules pour la mesure.

8. Procédé selon au moins une des revendications précédentes,
**caractérisé en ce**
**que** selon la position de la bande transporteuse, la radioactivité mesurée par un ou plusieurs premiers détecteurs est attribuée à une cellule.

9. Procédé selon au moins une des revendications précédentes,
**caractérisé en ce**
**qu'**une cellule présente, dans le sens de transport de la bande transporteuse, une longueur qui correspond à la plage de mesure d'un premier détecteur dans le sens de transport de la bande transporteuse.

10. Procédé selon au moins une des revendications précédentes,
**caractérisé en ce**
**que** des cellules et/ou, le cas échéant, au moins une partie d'une cellule avec, le cas échéant, une radioactivité divergeant des autres sont regroupées en un lot, sachant que la radioactivité déterminée ou calculée des cellules et/ou, le cas échéant, d'au moins une partie d'une cellule est regroupée en une radioactivité globale pour utiliser le lot en fonction de celle-ci.

11. Procédé selon au moins une des revendications précédentes,
**caractérisée en ce**
**qu'**est utilisé comme produit en vrac un produit d'une granulométrie allant jusqu'à 50 mm.

12. Procédé selon au moins une des revendications précédentes,
**caractérisé en ce**
**que** le rayonnement est mesuré pendant une durée (t) avec notamment 0 min < t ≤ 6 min, de préférence 20 s ≤ t ≤4 min, pour déterminer la radioactivité d'une quantité de produit en vrac formant une cellule, passant devant le premier et le second détecteur dans la durée t.

13. Procédé selon au moins une des revendications précédentes,
**caractérisé en ce**
**que** l'auto-absorption du rayonnement due à la hauteur du produit en vrac est corrigée par la hauteur déterminée au moyen dudit troisième détecteur.

14. Procédé selon au moins une des revendications précédentes,
**caractérisé en ce**
**que** le long de la bande transporteuse est guidé un gaz, notamment de l'air comprimé, de telle sorte que celui-ci s'écoule dans la zone de dépose de la bande transporteuse dans le sens opposé au sens de transport et qu'il s'écoule, dans la zone de déchargement de la bande transporteuse, dans le sens de transport.

15. Procédé selon au moins une des revendications précédentes,
**caractérisé en ce**
**que** selon le volume d'un récipient, tel un fût, dans lequel le produit en vrac doit être versé, un nombre donné, en volume, de cellules est déposé, avec éventuellement en plus une ou plusieurs cellules partielles, sur la deuxième bande transporteuse, que son poids est déterminé et qu'ensuite, il est versé dans le récipient.
